# EUROPÄISCHE PATENTSCHRIFT

(11) **EP 3 116 701 B1**
(45) Veröffentlichungstag und Bekanntmachung des Hinweises auf die Patenterteilung: **21.04.2021**
(21) Anmeldenummer: 15706241.5
(22) Anmeldetag: 25.02.2015
(51) Int. Cl.: B29C 48/325, B29C 48/09, B29C 48/92, B29C 48/10

(54) **SCHLAUCHSPRITZKOPF UND VERFAHREN ZUM HERSTELLEN EINES SCHLAUCHS**
HOSE EXTRUSION HEAD AND METHOD FOR PRODUCING A HOSE
TÊTE DE PULVÉRISATION DE TUYAU FLEXIBLE ET PROCÉDÉ SERVANT À FABRIQUER UN TUYAU FLEXIBLE

(30) Priorität: 14.03.2014 DE 102014103521
(43) Veröffentlichungstag der Anmeldung: 18.01.2017
(73) Patentinhaber: KraussMaffei Extrusion GmbH, 30625 Hannover (DE)
(72) Erfinder: REINEKE, Frank, 30952 Ronnenberg (DE); HEPKE, Harald, 30625 Hannover (DE)
(74) Vertreter: Krauss, Philipp
(86) Internationale Anmeldenummer: PCT/EP2015/053878
(87) Internationale Veröffentlichungsnummer: WO 2015/135750

(56) Entgegenhaltungen:
- EP-A1- 0 075 809
- DE-A1- 2 941 260
- JP-A- H0 431 026
- JP-A- S5 867 419
- JP-A- H03 216 324
- JP-U- H0 366 722
- US-A- 2 859 476

## Beschreibung

Die Erfindung betrifft einen Schlauchspritzkopf zum Herstellen eines Schlauchs gemäß dem Oberbegriff von Anspruch 1. Gemäß einem zweiten Aspekt betrifft die Erfindung ein Verfahren zum Herstellen eines Schlauchs.

Derartige Schlauchspritzköpfe werden in Anlagen zur Schlauchherstellung verwendet und formen aus dem Schlauchmaterial den Schlauch. Unverzichtbar bei der Fertigung von Schläuchen ist, dass eine vorgegebene Soll-Wandstärke des Schlauchs nicht unterschritten wird. Anderenfalls würde die spezifikationsgemäße Festigkeit des Schlauchs nicht erreicht. Um zur Herstellung eines Schlauchs möglichst wenig Schlauchmaterial aufwenden zu müssen, sollte der Schlauch um seinen vollständigen Umfang eine möglichst geringe Wandstärke haben. Idealerweise hat der Schlauch daher um seinen vollständigen Umfang genau die Soll-Wandstärke. Das aber setzt voraus, dass das Mundstück, das die Außenwand des entstehenden Schlauchs formt, perfekt zum Dorn, der die Innenwand des entstehenden Schlauchs formt, zentriert ist. Das ist mit bisherigen Schlauchspritzköpfen nur schwer erreichbar.

Aus der DE 10 2008 061 286 A1 ist ein Schlauchspritzkopf mit einer Zentriervorrichtung bekannt, mittel der das Mundstück und der Dorn relativ zueinander zentriert werden können. Dazu wird der Dorn in seiner Lage verändert. Nachteilig an diesem System ist, dass es technisch relativ aufwändig ist. Ein weiterer Nachteil an dem bekannten System ist, dass es nur für Quer-Schlauchspritzköpfe eingesetzt werden kann. In anderen Worten muss das Schlauchmaterial um einen Winkel von in der Regel 90° umgelenkt werden, damit die Zentriervorrichtung für den Dorn von außen betätigt werden kann.

Aus der EP 0 075 809 A1 und der JP S58 67419 A ist eine Vorrichtung zur Herstellung von Rohren aus plastischen Massen bekannt, bei der sich ein Mundstück über eine kalottenartige Lagerung stirnseitig an einem Spritzkopfgehäuse abstützt und mittels Schrauben gesichert ist. Mindestens zwei ringförmige, relativ gegeneinander verdrehbare Schrägscheiben und/oder mindestens drei gleichmäßig verteilte, in axialer Richtung verstellbare Abstützelemente sind außerhalb der kalottenartigen Lagerung zwischen dem Spritzkopfgehäuse und dem Mundstück angeordnet, um das Mundstück auf das Spritzkopfgehäuse zu zentrieren.

Aus der US 2,859,476 A ist ein Mundstück zum Extrudieren von Kunststoffrohren bekannt. Eine erste Vielzahl von umlaufend in Bohrlöchern des Mundstückes angeordneten Schrauben verbindet das Mundstück mit einer Muffe des Extrudergehäuses. Die Bohrlöcher für die erste Vielzahl von Schrauben sind innerhalb des Mundstückes größer als die Schäfte der Schrauben ausgebildet. Durch orthogonal zu der Vielzahl erster Schrauben angeordnete zweite Schrauben kann das Mundstück mittels des Spiels zwischen den ersten Schrauben und den Bohrlöchern zu der Öffnung des Extrudergehäuses zentriert werden.

Aus der JP H04 31026 A, der JP H03 66722 U und der JP H03 216324 A sind weitere Mundstücke bekannt, die mittels Schraubenverbindungen auf ein Extrudergehäuse zentriert werden.

DE 29 41 260 A1 beschreibt einen zur Erzeugung von Kunststoffschläuchen bestimmten Extruderkopf, welcher einen abwechselnd zylindrische und konische, einander stufenlos anschließende Wände aufweisenden Kanal für den Kunststoff nach Außen begrenzt, in welchem Kanal, zum Bilden eines symmetrischen, ringförmigen Fließraums mittig ein Torpedo mit abwechselnd zylindrisch und konisch, den äußeren Wänden entsprechend zum Bilden jeweils eines zylindrischen oder konischen Fließraumabschnitts verlaufenden, einander stufenlos anschließenden Wänden angeordnet ist.

Der Erfindung liegt die Aufgabe zugrunde, einen Schlauch mit einer homogenen Wandstärke auf einfache Weise herzustellen.

Die Erfindung löst das Problem durch einen Schlauchspritzkopf mit den Merkmalen von Anspruch 1. Erfindungsgemäß ist zudem ein Extruder mit einem erfindungsgemäßen Schlauchspritzkopf.

Vorteilhaft daran ist, dass eine radiale Bewegung des Mundstücks relativ zum Kopfgehäuse nur zu wenig Reibung zwischen dem Befestigungselement und dem Mundstück führt. Im Betrieb des Schlauchspritzkopfs, also wenn der Schlauchspritzkopf mit Schlauchmaterial beaufschlagt wird, ist daher eine relativ geringe Kraft notwendig, um das Mundstück relativ zum Kopfgehäuse zu bewegen.

Bei bekannten Schlauchspritzköpfen ist das Mundstück so angeordnet, dass das Befestigungselement in einer Spannfläche am Mundstück anliegt und über die Spannfläche eine Kraft auf das Mundstück ausübt und es so auf das Kopfgehäuse drückt. Um das Mundstück relativ zu dieser Spannfläche und zudem relativ zu einer Kontaktfläche zum Kopfgehäuse zu bewegen, muss eine Gesamt-Reibkraft überwunden werden, die die Summe aus den Reibkräften an der Kontaktfläche und an der Spannfläche ist.

Im Betrieb des Extruders, an dem der Schlauchspritzkopf befestigt ist, führen die sehr hohen Massenkräfte des Schlauchmaterials bei bekannten Systemen zwar zu einer Abnahme der Reibkraft an der Kontaktfläche, aber zu einer Zunahme der Reibkraft an der Spannfläche. Insgesamt musste daher eine große Gesamt-Reibkraft überwunden werden. Es kommt dabei zu einem Haft-Gleit-Effekt (englisch: stick-slip effect), der die erreichbare Genauigkeit bei der Zentrierung des Mundstücks relativ zum Dorn deutlich einschränkt.

Dadurch, dass das Befestigungselement mit einem Ende so am Mundstück befestigt ist, dass das Ende einer Bewegung des Mundstücks folgt, ist die Reibkraft an der Spannfläche stets klein. Im Betrieb des Schlauchspritzkopfs sinkt zudem die Reibkraft zwischen dem Mundstück und dem Kopfgehäuse. Daher muss beim Betrieb des Schlauchspritzkopfs nur eine geringe Gesamt-Reibkraft überwunden werden, um das Mundstück zu zentrieren. So kann das Mundstück sehr genau zentriert werden. Das wiederum erlaubt es, die Sicherheitszugabe zu verringern, die notwendig ist, um sicherzustellen, dass die Soll-Wandstärke nicht unterschritten wird. Die Sicherheitszugabe ist die Differenz zwischen der Soll-Wandstärke und der eingestellten Wandstärke, die hinreichend groß gewählt werden muss, um zu verhindern, dass die Soll-Wandstärke unter ungünstigen Produktionsbedingungen unterschritten wird. Die durch die Erfindung mögliche Verringerung der Sicherheitszugabe führt zu einem geringeren Verbrauch an Schlauchmaterial. Es ist möglich, dass zusätzlich zum Befestigungselement eine weitere Befestigungsvorrichtung vorhanden ist, mittels der das Mundstück auch am Kopfgehäuse befestigt ist. In anderen Worten kann das Befestigungselement allein das Mundstück am Kopfgehäuse befestigen, das ist aber nicht notwendig.

Im Rahmen der vorliegenden Beschreibung wird unter dem Kopfgehäuse dasjenige Bauteil verstanden, in dem der Kanal ausgebildet ist. Das Kopfgehäuse könnte auch als Grundkörper bezeichnet werden. Das Kopfgehäuse nimmt die radial auswärts wirkenden Massenkräfte auf, die vom Schlauchmaterial ausgeübt werden. Das Schlauchmaterial steht beim Betrieb des Schlauchspritzkopfs unter einem Druck von typischerweise bis zu 5 Megapascal.

Unter dem Dorn wird insbesondere dasjenige Bauteil verstanden, das die Innenwand des entstehenden Schlauchs formt. In der Regel ist der Dorn, wie in einer bevorzugten Ausführungsform vorgesehen, im Querschnitt kreisförmig, das heißt zumindest abschnittsweise zylinder- oder kegelförmig. Grundsätzlich ist die Erfindung aber auch für Dorne geeignet, die keinen kreisförmigen Querschnitt besitzen.

Unter dem Mundstück wird insbesondere dasjenige Bauteil des Schlauchspritzkopfs verstanden, das die Außenwand des entstehenden Schlauchs formt. Es ist möglich, in der Regel aber wie gemäß einer bevorzugten Ausführungsform vorgesehen entbehrlich, dass hinter dem Mundstück eine weitere Formgebungsvorrichtung angeordnet ist, die die Außenkontur des Schlauchs weiter formt.

Unter der Reibkraft zwischen dem Mundstück und dem Kopfgehäuse wird insbesondere diejenige Haft-Reibkraft verstanden, die eine Stellbewegung des Mundstücks relativ zum Kopfgehäuse behindert. In anderen Worten ist die Reibkraft insbesondere diejenige Haft-Reibkraft, die einer Stellbewegung des Mundstücks relativ zum Kopfgehäuse entgegenwirkt und zum Bewegen des Mundstücks überwunden werden muss. Die Stellbewegung ist diejenige Bewegung, die ein Mundstück aus einer unzentrierten Lage in eine zentrierte Lage bringt.

Vorzugsweise besitzt das Befestigungselement ein Ende, mit dem es am Mundstück befestigt ist, und zumindest ein zweites Ende, mit dem es relativ zum Kopfgehäuse befestigt ist. Das Befestigungselement überträgt zwischen dem ersten Ende und dem zweiten Ende eine Zugkraft. Das Befestigungselement kann daher auch als Zugelement bezeichnet werden. Beispielsweise ist das Befestigungselement in einem Mundstück-Befestigungspunkt am Mundstück befestigt, wobei unter dem Befestigungspunkt kein Punkt im mathematischen Sinne zu verstehen ist, sondern ein Bereich, der im Vergleich zu einer Stirnfläche des Mundstücks klein ist, insbesondere kleiner als ein Fünftel.

Gemäß einer bevorzugten Ausführungsform liegt das Mundstück in einer Kontaktfläche am Kopfgehäuse an und das Befestigungselement spannt das Mundstück auf die Kontaktfläche zu. Es ist dabei möglich, dass das Befestigungselement eine Druckkraft auf das Mundstück ausübt und dieses gegen die Kontaktfläche drückt. Diese Druckkraft ist der Massenkraft beim Betrieb des Schlauchspritzkopfs entgegen gerichtet.

Unter der Kontaktfläche wird insbesondere diejenige Fläche verstanden, die zwischen dem Mundstück und dem Kopfgehäuse gebildet ist und so orientiert ist, dass die Reibkraft zwischen der Kontaktfläche und dem Kopfgehäuse durch die Massenkraft, die beim Betrieb des Extruders, an dem der Schlauchspritzkopf befestigt ist, wirkt, verringert wird. In anderen Worten zählen nur solche Flächenanteile, in denen das Mundstück und das Kopfgehäuse in Kontakt miteinander stehen, zur Kontaktfläche, bei denen die Massenkraft einen Abstand zum Kopfgehäuse vergrößern würde, wenn das Mundstück beweglich wäre und nicht durch das Befestigungselement befestigt wäre.

Bevorzugt ist das Befestigungselement ausgebildet zum Ziehen des Mundstücks an das Kopfgehäuse. In diesem Fall kann das Befestigungselement auch als Zugelement bezeichnet werden. Selbstverständlich kann auch bei einem Zugelement ein Punkt entstehen, an dem eine Druckkraft übertragen wird. Maßgeblich ist jedoch, dass das Befestigungselement so ausgebildet ist, dass es durch eine Vorrichtung gebildet ist, die lediglich Zugkräfte übertragen kann, beispielsweise ein Seil oder eine Kette. In anderen Worten wird unter dem Merkmal, dass das Befestigungselement das Mundstück an das Kopfgehäuse zieht, verstanden, dass das Befestigungselement so ausgebildet ist, dass es durch ein reines Zugelement ersetzt werden kann, also ein Bauteil, das keine Druckkräfte übertragen kann. Beispielsweise ist das Befestigungselement eine Kette oder ein Seil, insbesondere ein Drahtseil.

Vorteilhaft an einem derartigen Befestigungselement ist, dass bei einer kleinen Bewegung des Mundstücks relativ zum Grundkörper in guter Näherung keine Reibung zwischen dem Mundstück und dem Befestigungselement eintritt. Zwischen dem Befestigungselement und dem Mundstück kommt es daher zu keiner oder nur zu einer insignifikant kleinen Reibung, so dass höchstens eine insignifikant kleine Reibkraft zwischen Mundstück und Befestigungselement überwunden werden muss, um das Mundstück relativ zum Gehäusekopf zu bewegen. Selbstverständlich verbleibt gegebenenfalls eine Reibkraft zwischen dem Mundstück und dem Kopfgehäuse selbst, diese Reibkraft nimmt aber durch die Wirkung der Massenkraft ab, so dass sie ebenfalls leicht zu überwinden ist. Das hat die oben geschilderten Vorteile beim Zentrieren des Mundstücks.

Vorzugsweise ist das Befestigungselement so angeordnet, dass eine Massenkraft, die vom Schlauchmaterial im Einsatz des Schlauchspritzkopfs auf das Mundstück ausgeübt wird, eine Reibkraft zwischen dem Mundstück und dem Kopfgehäuse verringert.

Gemäß einer bevorzugten Ausführungsform ist das Befestigungselement in einem Kopfgehäuse-Befestigungspunkt relativ zum Kopfgehäuse fixiert und in einem Mundstück-Befestigungspunkt am Mundstück befestigt. Dabei ist der Kopfgehäuse-Befestigungspunkt bezüglich eines Zuströmpfads des Schlauchmaterials stromaufwärts zum Mundstück-Befestigungspunkt angeordnet. Im Betrieb führt das dazu, dass die Massenkräfte, die das Schlauchmaterial auf das Mundstück ausüben, der Kraft entgegen wirken, die das Befestigungselement auf das Mundstück ausübt. Je größer also die Massenkraft ist, desto kleiner wird die Kraft, mit der das Mundstück und das Kopfgehäuse aneinander reiben können. Das führt zu der oben geschilderten leichten Verstellbarkeit.

Vorzugsweise umfasst das Mundstück einen Formeinsatzhalter und einen Formeinsatz, wobei der Formeinsatzhalter eine axiale Verstellvorrichtung zum Verstellen einer axialen Position des Formeinsatzes relativ zum Formeinsatzhalter besitzt. Unter der axialen Position wird dabei insbesondere die Position bezogen auf die Längsachse des Dorns verstanden. Der Dorn ist vorzugsweise zumindest an seiner dem Formeinsatz zugewandten Seite konisch, so dass durch das Verändern der axialen Position des Formeinsatzes ein Innendurchmesser des entstehenden Schlauchs veränderbar ist. Ein derartiger Schlauchspritzkopf erlaubt das feinfühlige Einstellen der Wanddicke und zudem ein Zentrieren. So können sehr geringe Materialverbräuche bei der Fertigung von Schläuchen erreicht werden. Alternativ ist das Mundstück einstückig ausgebildet.

Gemäß einer bevorzugten Ausführungsform umfasst der Schlauchspritzkopf eine Positioniervorrichtung zum Verändern einer Position des Mundstücks relativ zum Dorn, so dass das Mundstück relativ zum Dorn zentrierbar ist. Es kann sich hierbei um eine manuell betätigbare Positioniervorrichtung oder, wie gemäß einer bevorzugten Ausführungsform vorgesehen, eine automatisch betätigbare Positioniervorrichtung handeln. Beispielsweise umfasst die Positioniervorrichtung einen Antrieb, beispielsweise in Form eines Elektromotors oder eines Hydraulikzylinders. Der Elektromotor und/oder der Hydraulikzylinder können mit einem Kugelgewindetrieb zusammenarbeiten, um die Bewegung des Mundstücks relativ zum Kopfgehäuse zu ermöglichen. Es ist auch möglich, dass die Positioniervorrichtung einen Piezo-Antrieb umfasst.

Günstig, wenngleich nicht notwendig, ist es, dass die Positioniervorrichtung antagonistische Antriebe aufweist. Beispielsweise ist es vorteilhaft, wenn die Positioniervorrichtung zumindest zwei Paare einander gegenüberliegenden Piezo-Antriebe aufweist, die das Mundstück in entgegen gesetzte Richtungen bewegen können. Auf diese Weise können die Antriebe stets durch Aufbringen einer Druckkraft das Mundstück bewegen.

Vorzugsweise umfasst der Schlauchspritzkopf eine Positionsregelung, die die Positioniervorrichtung, die zumindest einen Antrieb zum automatischen Verändern der Position des Mundstücks aufweist, und eine Wandstärkenmessvorrichtung zum Messen einer Wandstärke des Schlauchs umfasst, wobei die Positionsregelung eingerichtet ist zum automatischen Verändern der Position des Mundstücks, so dass eine vorgegebene Soll-Wandstärke nicht unterschritten wird und eine Gesamt-Abweichung der Wandstärke von der vorgegebenen Soll-Wandstärke minimal wird. Die Wandstärken-Messvorrichtung kann beispielsweise eine Röntgenvorrichtung umfassen, mittels die Wandstärke durch die Schwächung der Röntgenstrahlen messbar ist.

Vorzugsweise besitzt der Schlauchspritzkopf eine Dichtung, die zwischen dem Mundstück und dem Kopfgehäuse angeordnet ist. Auf diese Weise wird ein Eindringen von Schlauchmaterial in den Bereich der Kontaktfläche vermieden.

Erfindungsgemäß ist zudem eine Schlauchherstellvorrichtung zum Herstellen eines Schlauches, die eine Extruder zum Abgeben von Schlauchmaterial, insbesondere Gummi, und einen erfindungsgemäßen Schlauchspritzkopf umfasst, wobei der Schlauchspritzkopf mit dem Extruder so verbunden ist, dass der Extruder im Betrieb das Schlauchmaterial in den Kanal abgibt.

Erfindungsgemäß ist zudem ein Verfahren zum Herstellen eines Schlauchs mit den Schritten: (i) Abgeben von Schlauchmaterial in den Kanal eines erfindungsgemäßen Schlauchspritzkopfs, so dass das Schlauchmaterial entlang des Dorns fließt, (ii) Messen einer Wandstärke des Schlauchs und (iii) automatisches Verändern der Position des Mundstücks, so dass eine vorgegebene Soll-Wandstärke nicht unterschritten wird und eine Gesamt-Abweichung der Wandstärke von der vorgegebenen Soll-Wandstärke minimal wird.

Im Folgenden wird die Erfindung anhand der beigefügten Zeichnungen näher erläutert. Dabei zeigt
- Figur 1: einen erfindungsgemäßen Schlauchspritzkopf in einem Querschnitt und einem Längsschnitt,
- Figur 2: den Querschnitt des Schlauchspritzkopfs gemäß Figur 1, nachdem das Mundstück dezentriert wurde und
- Figur 3: den Schlauchspritzkopf gemäß der vorhergehenden Figuren nach Betätigen einer Axial-Verstellvorrichtung.

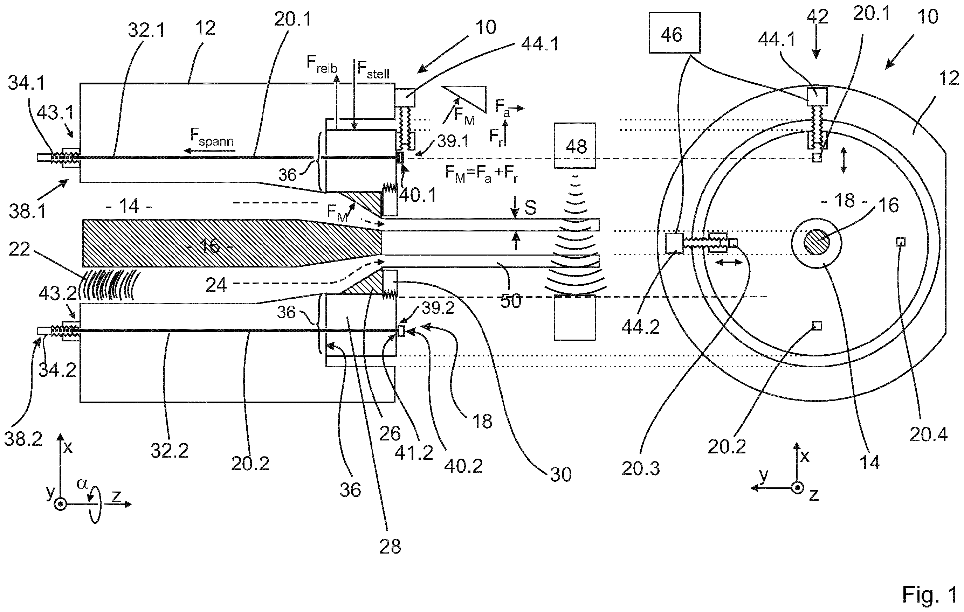

Figur 1 zeigt einen erfindungsgemäßen Schlauchspritzkopf 10 mit einem Kopfgehäuse 12, in dem ein Kanal 14 ausgebildet ist. In dem Kanal 14 befindet sich ein Dorn 16, der mit dem Kopfgehäuse 12 lösbar starr verbunden ist. Eine Schraffur dient zur Verdeutlichung eines Objekts und ist nicht zwangsläufig als Hinweis auf einen Schnitt zu sehen.

Der Schlauchspritzkopf 10 besitzt zudem ein Mundstück 18, das über Befestigungselemente 20 am Kopfgehäuse 12 befestigt ist. In Figur 1 sind die Befestigungselemente 20.1, 20.2, 20.3 und 20.4 eingezeichnet (Bezugszeichen ohne Zählsuffix beziehen sich jeweils auf alle entsprechenden Objekte). Die Zahl der Befestigungselemente ist jedoch in weiten Grenzen frei wählbar.

Im Betrieb ist der Kanal 14 mit Schlauchmaterial 22 gefüllt. Bei dem Schlauchmaterial 22 handelt es sich meist um Kautschuk. Das Schlauchmaterial 22 fließt entlang eines Zuströmpfads 24, der durch Pfeile angedeutet ist, auf das Mundstück 18 zu.

Das Mundstück 18 umfasst in der vorliegenden Ausführungsform einen Formeinsatz 26 und einen Formeinsatzhalter 28. Der Formeinsatzhalter 28 verfügt über eine Axial-Verstellvorrichtung 30. In der in Figur 1 gezeigten Ausführungsform ist die Axial-Verstellvorrichtung 30 durch einen Ring mit Außengewinde gebildet, der mit dem Formeinsatzhalter 28 kämmt. Durch Drehen des Rings um seine Längsachse (im vorliegenden Fall um die z-Achse) kann die axiale Position des Formeinsatzes 26 relativ zum Formeinsatzhalter 28 verändert werden. Die axiale Position ist die Höhe bezüglich der z-Achse, die einer Längsachse des Dorns 16 entspricht. Gemäß einer alternativen Ausführungsform kann das Mundstück 18 einstückig ausgebildet sein.

Das Befestigungselement 20 umfasst Spannelemente, im vorliegenden Fall Spanndrahtseile 32, von denen die Spanndrahtseile 32.1, 32.2 gezeigt sind. Die Spanndrahtseile 32 werden durch Spannvorrichtungen 34 so vorgespannt, dass sie eine Spannkraft Fₛₚₐₙₙ auf das Mundstück 18 übertragen.

Das Mundstück 18 liegt in einer Kontaktfläche 36 am Kopfgehäuse 12 an. Kommt es zu einer Stellbewegung, also einer Bewegung in der x-y-Ebene, so muss dazu eine Stellkraft Fₛₜₑₗₗ auf das Mundstück 18 aufgebracht werden, die größer ist als eine Reibkraft F_{reib}.

Wie schematisch gezeigt ist, übt das Schlauchmaterial 22 eine Massenkraft F_{M} auf das Mundstück 18 aus. Der Begriff der Massenkraft ist dabei gewählt, da das Schlauchmaterial, das auch als die zu verarbeitende Masse bezeichnet werden kann, diese Kraft ausübt. Der Begriff Massenkraft ist nicht dahingehend zu verstehen, dass sie überwiegend durch die Trägheit von umgelenkten Massen zustande kommt. In den Figuren sind die Kräfte der Einfachheit halber ohne Vektorpfeil notiert. Selbstverständlich sind die Kräfte allesamt vektorielle Größen.

Wie schematisch gezeigt ist, lässt sich die Massenkraft F_{M} vektoriell in eine axial wirkende Kraft Fₐ und eine radial wirkende Kraft Fᵣ zerlegen. Der axiale Anteil Fₐ wirkt der Spannkraft Fₛₚₐₙₙ entgegen. Das heißt, dass eine Vektoraddition der Spannkraft Fₛₚₐₙₙ und des axialen Anteils Fₐ der Massenkraft F_{M} einen kleineren Betrag hat als die Spannkraft Fₛₚₐₙₙ. Auf die Kontaktfläche P übt das Mundstück 18 eine Flächenpressung p₃₆ aus, die auch als Druck verstanden werden kann. Durch die Wirkung der Massenkraft F_{M} verringert sich die Flächenpressung p₃₆. Dadurch sinkt die Reibkraft F_{reib} mit zunehmender Massenkraft F_{M}.

Die Befestigungselemente 20 besitzen jeweils einen Kopfgehäuse-Befestigungspunkt 38 und einen Mundstück-Befestigungspunkt 40. Jedes Befestigungselement 20 hat ein erstes Ende 39, mit dem es am Mundstück 18 im jeweiligen Mundstück-Befestigungspunkt 40 befestigt ist. Das Befestigungselement 20 liegt mit einer Spannfläche 41 am Mundstück 18 an. Der Kopfgehäuse-Befestigungspunkt 38 ist an einem zweiten Ende 43 des Befestigungselements 20 ausgebildet.

Der Mundstück-Befestigungspunkt 40 ist stromabwärts relativ zum Kopfgehäuse-Befestigungspunkt 38 angeordnet, das heißt, dass das Schlauchmaterial 22 zunächst in der nähe des Kopfgehäuse-Befestigungspunkts vorbeifließt und danach in der Nähe des Mundstück-Befestigungspunkts. Auf diese Weise kommt die oben beschriebene Wirkung der Massenkraft F_{M} in Bezug auf die Spannkraft Fₛₚₐₙₙ zustande.

Im rechten Teilbild ist gezeigt, dass der Schlauchspritzkopf 10 eine Positioniervorrichtung 42 umfasst. Die Positioniervorrichtung 42 umfasst in der vorliegenden Ausführungsform zwei Antriebe 44.1, 44.2, die jeweils einen Kugelgewindetrieb und einen Motor zum Antreiben des Kugelgewindetriebs umfassen. Durch Betätigen der Antriebe 44.1, 44.2 kann das Mundstück 18 relativ zum Dorn 16 zentriert werden.

Die Antriebe 44 sind durch schematisch eingezeichnete Kabel mit einer Positionsregelung 46 verbunden. Die Positionsregelung 46 steht zudem in Verbindung mit einer Wandstärkendicke-Messvorrichtung 48, mittels der eine Wandstärke S eines zu fertigen Schlauchs 50 gemessen wird. Die Positionsregelung 46 erfasst kontinuierlich, ob die Wandstärke S einer Soll-Wandstärke Sₛₒₗₗ entspricht. Wird eine Abweichung festgestellt, so steuert die Positionsregelung 46 die Antriebe 44 so an, dass eine etwaige Dezentrierung behoben oder zumindest vermindert wird. Es ist zudem möglich, dass der Schlauchspritzkopf 10 eine automatische Axial-Verstellvorrichtung aufweist, die ebenfalls mit der Positionsregelung 46 verbunden ist.

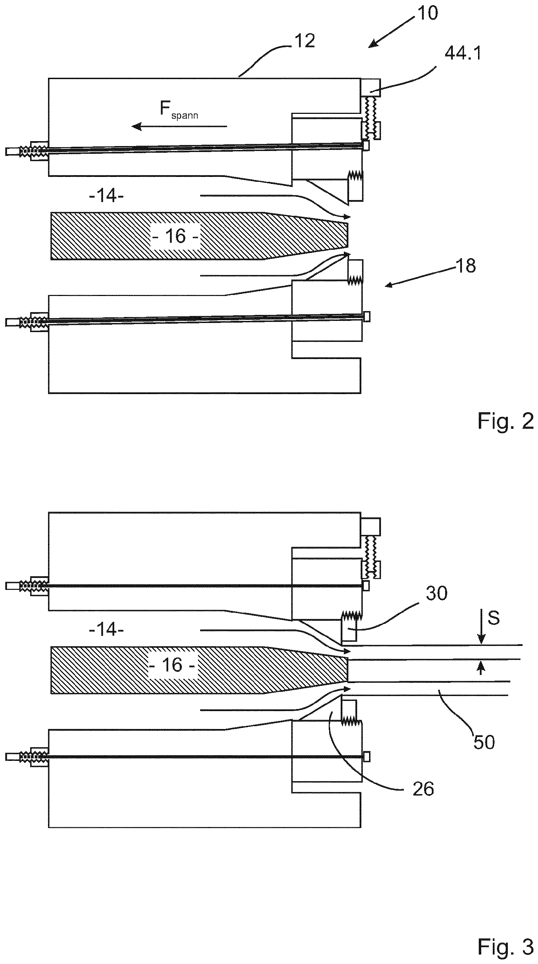

Figur 2 zeigt den Fall, in dem das Mundstück 18 durch Betätigen des Antriebs 44.1 relativ zum Kopfgehäuse 12 bewegt wurde. Es ist zu erkennen, dass das Mundstück 18 nun unzentriert relativ zum Dorn 16 angeordnet ist.

Figur 3 zeigt die Wirkung einer Verstellung der Axial-Verstellvorrichtung 30. Es ist zu erkennen, dass der Formeinsatz 26 weiter auf den Dorn 16 zu bewegt wurde. Da der Dorn 16 an seinem dem Mundstück 18 zugewandten Ende konisch ausgebildet ist, verringert sich durch diese Bewegung die Wandstärke S des Schlauchs 50. Der erfindungsgemäße Schlauchspritzkopf 10 ermöglicht es daher, sowohl die Wandstärke S als auch die Wandstärkenunterschiede durch Zentrieren des Mundstücks 18 einzustellen.

### Bezugszeichenliste

- 10: Schlauchspritzkopf
- 12: Kopfgehäuse
- 14: Kanal
- 16: Dorn
- 18: Mundstück
- 20: Befestigungselement
- 22: Schlauchmaterial
- 24: Zuströmpfad
- 26: Formeinsatz
- 28: Formeinsatzhalter
- 30: Axial-Verstellvorrichtung
- 32: Spanndrahtseile
- 34: Spannvorrichtung
- 36: Kontaktfläche
- 38: Kopfgehäuse-Befestigungspunkt
- 39: erstes Ende
- 40: Mundstück-Befestigungspunkt
- 41: Spannfläche
- 42: Positioniervorrichtung
- 43: zweites Ende
- 44: Antrieb
- 46: Positionsregelung
- 48: Wandstärkendicken-Messvorrichtung
- 50: Schlauch
- Fₛₚₐₙₙ: Spannkraft
- F_{reib}: Reibkraft
- Fₛₜₑₗₗ: Stellkraft
- F_{M}: Massenkraft
- p₃₆: Flächenpressung
- S: Wandstärke
- Sₛₒₗₗ: Soll-Wandstärke

## Patentansprüche

1. Schlauchspritzkopf zum Herstellen eines Schlauchs (50), mit
(a) einem Kopfgehäuse (12),
(b) einem Kanal (14), der im Kopfgehäuse (12) ausgebildet ist, zum Zuführen eines Schlauchmaterials (22),
(c) einem Dorn (16), der im Kanal (14) angeordnet ist,
(d) einem Mundstück (18) und
(e) zumindest einem Befestigungselement (20), mittels dem das Mundstück am Kopfgehäuse befestigt ist,
(f) wobei das Mundstück (18) zum Zentrieren relativ zum Dorn (16) bewegbar ist und
(g) das Befestigungselement (20) mit einem Ende (39) so am Mundstück (18) befestigt ist, dass das Ende (39) einer Bewegung des Mundstücks (18) folgt, **dadurch gekennzeichnet, dass**
(h) das Befestigungselement durch eine Vorrichtung gebildet ist, die vorgespannte Spanndrahtseile umfasst und die lediglich Zugkräfte überträgt.

2. Schlauchspritzkopf nach Anspruch 1, **dadurch gekennzeichnet, dass**
- das Mundstück (18) in einer Kontaktfläche (36) am Kopfgehäuse (12) anliegt und
- das Befestigungselement (20) das Mundstück (18) auf die Kontaktfläche (36) zu spannt.

3. Schlauchspritzkopf nach einem der vorstehenden Ansprüche, **dadurch gekennzeichnet, dass**
das Befestigungselement (20) so angeordnet ist, dass eine Massenkraft (F_{M}), die vom Schlauchmaterial (22) im Einsatz des Schlauchspritzkopfs (10) auf das Mundstück (18) ausgeübt wird, eine Reibkraft (F_{reib}) zwischen dem Mundstück (18) und dem Kopfgehäuse (12) verringert.

4. Schlauchspritzkopf nach einem der vorstehenden Ansprüche, **dadurch gekennzeichnet, dass**
- das Befestigungselement (20)
in einem Kopfgehäuse-Befestigungspunkt (38) relativ zum Kopfgehäuse (12) fixiert ist und
in einem Mundstück-Befestigungspunkt (40) am Mundstück (18) befestigt ist,
- wobei der Kopfgehäuse-Befestigungspunkt (38) bezüglich eines Zuströmpfads (24) des Schlauchmaterials (22) stromaufwärts zum Mundstück-Befestigungspunkt (40) angeordnet ist.

5. Schlauchspritzkopf nach einem der vorstehenden Ansprüche, **dadurch gekennzeichnet, dass** das Mundstück (18)
- einen Formeinsatzhalter (28)
- einen Formeinsatz (26) umfasst,
- wobei der Formeinsatzhalter (28) eine Axialverstellvorrichtung (30) zum Verstellen einer axialen Position des Formeinsatzes (26) relativ zum Formeinsatzhalter (28) besitzt.

6. Schlauchspritzkopf nach einem der vorstehenden Ansprüche, **gekennzeichnet durch** eine Positioniervorrichtung (42) zum Verändern einer Position des Mundstücks (18) relativ zum Dorn (16), so dass das Mundstück (18) relativ zum Dorn (16) zentrierbar ist.

7. Schlauchspritzkopf nach Anspruch 6, **gekennzeichnet durch** eine Positionsregelung (46), die
- die Positioniervorrichtung (42), die zumindest einen Antrieb (44) zum automatischen Verändern der Position des Mundstücks (18) aufweist, und
- eine Wandstärkenmessvorrichtung (48) zum Messen einer Wandstärke (d) des Schlauchs (50) umfasst und die
- eingerichtet ist zum automatischen Verändern der Position des Mundstücks (18), so dass eine vorgegebene Soll-Wandstärke (dₛₒₗₗ) nicht unterschritten wird und eine Gesamt-Abweichung der Wandstärke (d) von der vorgegebenen Soll-Wandstärke (dₛₒₗₗ) minimal wird.

8. Schlauchspritzkopf nach einem der vorstehenden Ansprüche, **gekennzeichnet durch** eine Dichtung, die zwischen dem Mundstück (18) und dem Kopfgehäuse (12) angeordnet ist.

9. Schlauchherstellvorrichtung zum Herstellen eines Schlauchs, mit
- einem Extruder zum Abgeben von Schlauchmaterial (22), insbesondere Gummi, und
- einem Schlauchspritzkopf (10) nach einem der vorstehenden Ansprüche, der mit dem Extruder so verbunden ist, dass der Extruder im Betrieb das Schlauchmaterial (22) in den Kanal (14) abgibt.

10. Verfahren zum Herstellen eines Schlauchs, mit den Schritten:
(i) Abgeben von Schlauchmaterial (22) in den Kanal (14) eines Schlauchspritzkopfs (10) nach einem der vorstehenden Ansprüche, so dass dieser entlang des Dorns (16) fließt,
(ii) Messen einer Wandstärke (d) des Schlauchs (50) und
(iii) automatisches Verändern der Position des Mundstücks (18), so dass eine vorgegebene Soll-Wandstärke (dₛₒₗₗ) nicht unterschritten wird und eine Gesamt-Abweichung der Wandstärke (d) von der vorgegebenen Soll-Wandstärke (dₛₒₗₗ) minimal wird.

## Claims

1. A hose extrusion head for producing a hose (50), with
(a) a head housing (12),
(b) a duct (14), which is formed in the head housing (12), for supplying a hose material (22),
(c) a pin (16), which is arranged in the duct (14),
(d) a die (18) and
(e) at least one securing element (20), by means of which the die is attached to the head housing,
(f) wherein the die (18) is movable for centring relative to the pin (16) and
(g) the securing element (20) is attached by one end (39) to the die (18) so that the end (39) follows a movement of the die (18), **characterized in that**
(h) the securing element is formed by a device which comprises pre-tensioned tension wire cables and which only transfers tensile forces.

2. The hose extrusion head according to Claim 1, **characterized in that**
- the die (18) lies against the head housing (12) in a contact surface (36) and
- the securing element (20) clamps the die (18) towards the contact surface (36).

3. The hose extrusion head according to one of the preceding claims, **characterized in that**
the securing element (20) is arranged so that a mass force (F_{M}), which is exerted by the hose material (22) onto the die (18) in the operation of the hose extrusion head (10), reduces a frictional force (F_{fric}) between the die (18) and the head housing (12).

4. The hose extrusion head according to one of the preceding claims, **characterized in that**
- the securing element (20)
is fixed in a head housing attachment point (38) relative to the head housing (12) and
is attached to the die (18) in a die attachment point (40),
- wherein the head housing attachment point (38) is arranged upstream to the die attachment point (40) with respect to an inflow path (24) of the hose material (22).

5. The hose extrusion head according to one of the preceding claims, **characterized in that** the die (18) comprises
- a mould insert holder (28)
- a mould insert (26),
- wherein the mould insert holder (28) has an axial adjusting device (30) for adjusting an axial position of the mould insert (26) relative to the mould insert holder (28).

6. The hose extrusion head according to one of the preceding claims, **characterized by** a positioning device (42) for altering a position of the die (18) relative to the pin (16), so that the die (18) is able to be centred relative to the pin (16) .

7. The hose extrusion head according to Claim 6, **characterized by** a position regulation (46), which comprises
- the positioning device (42), which has at least one drive (44) for automatically altering the position of the die (18), and
- a wall thickness measuring device (48) for measuring a wall thickness (d) of the hose (50) and which
- is arranged for automatically altering the position of the die (18), so that a predetermined nominal wall thickness (dₙₒₘ) is not fallen below and an overall deviation of the wall thickness (d) from the predetermined nominal wall thickness (dₙₒₘ) becomes minimal.

8. The hose extrusion head according to one of the preceding claims, **characterized by** a seal which is arranged between the die (18) and the head housing (12) .

9. A hose production device for producing a hose, with
- an extruder for delivering hose material (22), in particular rubber, and
- a hose extrusion head (10) according to one of the preceding claims, which is connected to the extruder so that the extruder, in operation, delivers the hose material (22) into the duct (14).

10. A method for producing a hose, with the steps:
(i) delivering of hose material (22) into the duct (14) of a hose extrusion head (10) according to one of the preceding claims, so that it flows along the pin (16),
(ii) measuring a wall thickness (d) of the hose (50) and
(iii) automatic altering of the position of the die (18) so that a predetermined nominal wall thickness (dₙₒₘ) is not fallen below and an overall deviation of the wall thickness (d) from the predetermined nominal wall thickness (dₙₒₘ) becomes minimal.

## Revendications

1. Tête de pulvérisation de tuyau pour fabriquer un tuyau (50), comprenant :
(a) un logement de tête (12),
(b) un canal (14) qui est formé dans le logement de tête (12) pour alimenter un matériau de tuyau (22),
(c) un poinçon (16) qui est disposé dans le canal (14),
(d) une pièce d'embouchure (18) et
(e) au moins un élément de fixation (20) au moyen duquel la pièce d'embouchure est fixée sur le logement de tête,
(f) dans laquelle la pièce d'embouchure (18) est mobile pour un centrage par rapport au poinçon (16) et
(g) l'élément de fixation (20) est fixé par une extrémité (39) sur la pièce d'embouchure (18) de telle façon que l'extrémité (39) suit un mouvement de la pièce d'embouchure (18),
**caractérisée en ce que**
(h) l'élément de fixation est formé par un dispositif qui comprend des câbles de tension pré-contraints et qui transmet uniquement des forces de traction.

2. Tête de pulvérisation de tuyau selon la revendication 1, **caractérisée en ce que**
- la pièce d'embouchure (18) repose dans une surface de contact (36) sur le boîtier de tête (12) et
- l'élément de fixation (20) tend la pièce d'embouchure (18) vers la surface de contact (36) .

3. Tête de pulvérisation de tuyau selon l'une des revendications précédentes, **caractérisée en ce que** l'élément de fixation (20) est ainsi disposé qu'une force d'inertie (F_{M}) qui est exercée par le matériau de tuyau (22) dans l'insert de la tête de pulvérisation de tuyau (10) sur la pièce d'embouchure (18), limite une force de frottement (F_{frott}) entre la pièce d'embouchure (18) et le logement de tête (12).

4. Tête de pulvérisation de tuyau selon l'une des revendications précédentes, **caractérisée en ce que**
- l'élément de fixation (20)
est fixé dans un point de fixation (38) de logement de tête par rapport au logement de tête (12) et
est fixé dans un point de fixation (40) de pièce d'embouchure sur la pièce d'embouchure (18),
- dans laquelle le point de fixation (38) de logement de tête est disposé en amont d'écoulement du point de fixation (40) de pièce d'embouchure par rapport à un trajet d'alimentation (24) du matériau de tuyau (22) .

5. Tête de pulvérisation de tuyau selon l'une des revendications précédentes, **caractérisée en ce que** la pièce d'embouchure (18) comprend
- un support d'insert de moule (28),
- un insert de moule (26),
- dans laquelle le support d'insert de moule (28) possède un dispositif de décalage axial (30) pour décaler une position axiale de l'insert de moule (26) par rapport au support d'insert de moule (28).

6. Tête de pulvérisation de tuyau selon l'une des revendications précédentes, **caractérisée par** un dispositif de positionnement (42) pour modifier une position de la pièce d'embouchure (18) par rapport au poinçon (16) de façon à ce que la pièce d'embouchure (18) puisse être centrée par rapport au poinçon (16).

7. Tête de pulvérisation de tuyau selon la revendication 6, **caractérisée par** un réglage de position (46), qui comprend
- le dispositif de positionnement (42) qui présente au moins un entraînement (44) pour la modification automatique de la position de la pièce d'embouchure (18) et
- un dispositif de mesure d'épaisseur de paroi (48) pour mesurer une épaisseur de paroi (d) du tuyau (50) et qui
- est aménagé pour la modification automatique de la position de la pièce d'embouchure (18) de façon à ce qu'une épaisseur de paroi de consigne (d_{con}) prédéfinie ne soit pas dépassée en-deça et qu'un écart total de l'épaisseur de paroi (d) à l'épaisseur de paroi de consigne (d_{con}) prédéfinie soit minimal.

8. Tête de pulvérisation de tuyau selon l'une des revendications précédentes, **caractérisée par** un joint qui est placé entre la pièce d'embouchure (18) et le logement de tête (12).

9. Dispositif de fabrication de tuyau pour fabriquer un tuyau, comprenant
- une extrudeuse pour faire sortir du matériau de tuyau (22), en particulier du caoutchouc, et
- une tête de pulvérisation de tuyau (10) selon l'une des revendications précédentes, qui est ainsi reliée à l'extrudeuse que l'extrudeuse, pendant le fonctionnement, fait sortir le matériau de tuyau (22) dans le canal (14).

10. Procédé pour fabriquer un tuyau, comprenant les étapes :
(i) de faire sortir du matériau de tuyau (22) dans le canal (14) d'une tête de pulvérisation de tuyau (10) selon l'une des revendications précédentes, de façon à ce que celui-ci s'écoule le long du poinçon (16),
(ii) de mesurer une épaisseur de paroi (d) du tuyau (50) et
(iii) de modifier automatiquement la position de la pièce d'embouchure (18) de façon à ce qu'une épaisseur de paroi de consigne (d_{con}) prédéfinie ne soit pas dépassée en-deça et qu'un écart total de l'épaisseur de paroi (d) à l'épaisseur de paroi de consigne (d_{con}) prédéfinie soit minimal.
